# EUROPEAN PATENT APPLICATION

(11) **EP 3 726 679 A1**
(43) Date of publication of application: **21.10.2020**
(21) Application number: 19169853.9
(22) Date of filing: 17.04.2019
(51) Int. Cl.: H02H 3/04, H02H 1/06, H02H 1/00

(54) **DEVICE STATUS INDICATOR FOR CIRCUIT BREAKERS**

(71) Applicant: ABB Schweiz AG, 5400 Baden (CH)
(72) Inventor: MARINKOVIC, Stevan, 5430 Wettingen (CH); MARET, Yannick, 5405 Dättwil (CH); ANGELOSANTE, Daniele, 5300 Turgi (CH); ZLATANSKI, Martin, 8700 Küsnacht (CH)
(74) Representative: Maiwald Patent- und Rechtsanwaltsgesellschaft mbH

(57) **Abstract**

The present invention relates to a device status indicator 100 for a circuit breaker 112, comprising a memory module 102 and a passive wireless communication module 104. The memory module 102 has a memory 122, a controller interface 106, and a first data interface circuit 108. The passive wireless communication module 104 has a communication unit, a second data interface circuit 109 and a wireless interface 118. The memory module 102 is configured to receive device status information from the controller interface 106, and to store the received device status information, e.g., in case of a circuit breaker trip. The passive wireless communication module 104 is configured to retrieve the device status information from the memory 122 over the data interface 108 and to send the device status information over the wireless interface 118 when it is wirelessly powered, to, for example, a smartphone, that comprises a communication module, that is compatible to the wireless communication module 104 of the device status indicator 100.

## Description

### FIELD OF THE INVENTION

The present invention relates to a device status indicator for circuit breakers, a method for indicating the device status of a circuit breaker, and a circuit breaker.

### BACKROUND

Circuit breakers protect lines or devices from overcurrent and other damaging situation, which may cause overheating and damaging the lines or devices. They interrupt current flow when a fault is detected. In contrast to fuses, which must be replaced once they have operated, circuit breakers can be reset. However, depending on the damaging situation or, e.g., the root-cause of the trip of a circuit breaker, it may be unsafe to power the protected branch again. Hence, providing device status information as, for example, root-cause information to an operator/user shall increase safety. As basic information could be provided to the user: trip due to thermal overload or, in case of arc-fault detectors (also referred to as Arc Fault Detectors, AFD, Arc Fault Detection Devices, AFDD or Arc Fault Circuit Interrupters; AFCI), due to an arc, with information of the type of arc. For example, the user may consider powering back the circuit in case of thermal overload but not in case of short circuit or arc trip.

### SUMMARY

The objective of the invention is to increase safety when operating a circuit breaker.

The problem is solved by the subject-matter of the independent claims. Embodiments are provided by the dependent claims, the following description and the accompanying figures.

The described embodiments similarly pertain to the method for indicating device status information, the circuit breaker, the controller for controlling a circuit breaker, the computer program element and the computer-readable medium. Synergetic effects may arise from different combinations of the embodiments although they might not be described in detail.

Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

In case that a circuit breaker trip event occurs, the circuit breaker disconnects the power within a few milliseconds. Thereafter, no energy is available any more to operate a microprocessor, a memory, a monitor or a communication device, which would be necessary to collect information about the reason why the trip event occurred, to store the information into a memory and to indicate the device status as, for example, the root cause of the trip event or measurement data to a person who might restart the circuit breaker. Restarting the circuit breaker is only safe under certain circumstances, which may be indicated by an indicator according to the following aspects and embodiments.

According to a first aspect, a device status indicator for a circuit breaker is provided, comprising a memory module and a passive wireless communication module. The memory module has a memory, preferably a non-volatile memory, such as, for example, a flash memory or an electrical erasable programmable read-only memory (EEPROM), a controller interface, that is, a link to a controller, and a first data interface. The passive wireless communication module has a communication unit, a second data interface connected to the first data interface circuit, and a wireless interface. The memory module is configured to receive device status information from the controller interface, and to store the received device status information, e.g., continuously or in case of a circuit breaker trip. The passive wireless communication module is configured to retrieve the device status information from the memory over the data interface, and to send the device status information over the wireless interface, when it is wirelessly powered, to, for example, a smartphone, that comprises a communication module which is compatible to the communication module of the device status indicator.

The term passive wireless is understood such that the wireless communication module does not have or does not need a local power supply, such as a wired power supply, to perform the transmission. For example, an RFID radio device is considered passive in this sense, since it can be constructed and operated such that it transmits information upon having harvested energy from an external field, such as an external magnetic or external electromagnetic field, and by modulating the energy thereof. We also consider communication module to be passive in the case that it has an auxiliary internal power supply for processing and transmission but does not involve energy therefrom to initiate the transmitting operation. Energy for waking up the wireless communication module and subsequently start the transmission of the device status indicator is provided by an external source.

The term "non-volatile memory" is to be understood to comprise any physical memory suitable for storing the information to be indicated.

According to an embodiment, the device status indicator is a trip-root cause indicator, configured to indicate trip-root cause information, a measurement indicator, configured to indicate measured signals, or a status indicator, configured to indicate device data, such as, for example, internal states and other information such as, but not limited to, type and characteristics of the loads at the time of the trip, historical data such as average current, peak current, power quality, etc.

According to an embodiment, the memory is a non-volatile memory; the device status information is root-cause information; and the memory module is configured to receive the root-cause information from the controller interface and to store the received root-cause information in case of a circuit breaker trip configured to receive the trip root-cause information before the circuit breaker is tripped.

Therefore, the device status indicator is designed such that it is capable to collect and store trip root cause information when electrical power is still available; e.g., before the trip of the circuit breaker, and to transmit the stored information, when no electrical power is available any more, e.g., after the trip of the circuit breaker. No power is needed to maintain the last updated value. In other words, the user can access the panel at any time after the trip, and interface with the circuit breaker in a simple manner, e.g., by placing the smartphone close to the circuit breaker, to determine the root cause of the trip. The indicator may as well suggest that it is unsafe to power back the branch, e.g., by displaying a skull or a danger sign. The measured signals leading to the trip decision may additionally be saved in the memory. The signals can further be transmitted to a server via the smartphone or used on the smartphone. The signals then can be analysed offline (automatically or by a human) to confirm the trip decision of the trip unit. The wireless interface could also be accessible by the smartphone if the circuit breaker has not tripped.

According to an embodiment, the device status information comprises device status raw data or processed device status raw data and/or a circuit breaker identification. Raw data may be measurement data of the measurement circuit or sensor data directly from the sensor. Processed device status raw data may be, e.g., filtered data, scaled data, evaluated or analysed data, that may, for example, yet comprise a hint for the cause of the trip, a categorization of the severity or a result of a frequency analysis of the current. Aspects to choose one or the other type of information acquisition, processing and transmission may be processing power, data rates, storage rates, available memory and electrical power, etc.

According to an embodiment, the wireless device status indicator further comprises an energy buffer, wherein the memory, e.g., a non-volatile memory, is configured to receive the device status information at least partly after the trip; and wherein the energy buffer is configured to provide, after the trip, buffered energy to the controller interface and to the memory for storing the device status information. By means of the energy buffer, the time in which energy is still available after a trip, is extended. A typical energy buffer may be, for example, a capacitor. A design of the buffer circuit has to be chosen in such a way, that the energy buffer is de-coupled from the failing circuit, so that, for example in case of a short circuit, the capacitor is not unloaded. The size of the buffer may depend on the processing power and the amount of data to be stored. Alternatively, the time after determining a trip event and breaking the circuit may be delayed. However, in this case, the trip behaviour would be influenced. Yet another alternative solution is to have an indicator that displays the present status of the AFFD in a continuous manner. That is, the AFFD has different internal states that are changed according to the status of the branch it is protecting. Each internal AFFD state is associated with an indicator state. The latter changes as the former are changed. The indicator state may be continuously updated in the memory. Furthermore, the indicator state may also be continuously transmitted over the wireless interface when it is wirelessly powered.

According to an embodiment, the passive wireless communication module is a Near Field Communication module or an RFID module. Passive relates to energy supply and means, that the module is capable to be powered without wire, e.g. by induction. The energy source is a corresponding device, which is called here also "RFID reader" or "compatible communication module". The reader could be an ad hoc device, or a mobile phone equipped with NFC or an equivalent technology.

According to an embodiment, the device status indicator is mounted inside the housing of the circuit breaker. The circuit breaker may also comprise a controller, as for example a microcontroller, that collects the measurement and/or sensor data and stores the raw data or processed data into the memory. The design of the hardware may consider that the passive wireless communication module is arranged such that the transmission of the power and the data is ensured.

According to an aspect, a circuit breaker is provided, comprising the modules, circuits and devices as described above, wherein various configurations are possible with respect to, e.g. which of the modules, devices, and circuits are integrated into the circuit breaker.

According to an aspect, a method for indicating device status information of a circuit breaker is provided, comprising the steps: collecting, e.g., continuously or, especially in case of a circuit breaker trip, directly before tripping, circuit breaker device status information; storing the circuit breaker status information in a memory, e.g., a non-volatile memory; powering, by a remote communication device, the passive wireless communication module wirelessly; retrieving, by a remote communication device, the device status information from the memory; and indicating the device status information. The device status information may be raw sensor data and/or data processed, evaluated and assessed by a controller. Data may be collected continuously during the operation of the circuit to be monitored; the buffer size is chosen such that at least data of a relevant time span before the trip is buffered, which can then be collected, evaluated and stored in case of a circuit breaker trip. This part of the method is performed when electrical power is still available, that is, either before the disconnection of the current and/or during a phase shortly after the disconnection if an energy buffer is employed. The retrieval of the data by a remote device can be performed when no circuit energy is available due to the trip of the circuit breaker. The energy necessary for the reading from the memory, the wireless communication and the indication is provided by the remote communication device.

According to an aspect, a controller for controlling a device status indicator as, e.g., a device status indicator described above, is provided, wherein the controller is configured to receive device status data, to evaluate the data, and in case that a circuit breaker trip event is determined, to signal a trip event to the circuit breaker; wherein the controller is further configured to store the device status raw data in a memory, e.g., a non-volatile memory, when a trip event is determined. Furthermore, the controller is configured to be switched off in case of a circuit breaker trip. The controller and the memory are connected to the circuit power before the circuit breaker trip and are disconnected, i.e., powered-down, after the circuit breaker trip, so that the controller can't provide data read access to the memory anymore and the memory is not accessible any more by a wired connection without being dismounted, as long as the circuit breaker is not reset.

According to an embodiment, the controller is further configured to process the device status raw data and to store results of the processing and/or a circuit breaker identification in the memory. The circuit breaker identification may be useful to remotely identify the circuit or the type of circuit to be monitored, the maintenance status of the soft- or hardware, etc.

According to an aspect, a program element is provided, which when being executed by the controller, instructs the device status indicator to perform the steps of the method described above. The program element may be implemented as software or hardware, preferably as an embedded program element or as a logic, e.g., in an FPGA or a CPLD or an ASIC.

The program element may be part of a computer program, but it can also be an entire program by itself. For example, the program element may be used to update an already existing program to get to the present invention.

According to an aspect, a computer readable medium is provided on which a program element according to the program element described above is stored.

The computer readable medium may be a storage medium, such as for example, a USB stick, a CD, a DVD, a data storage device, a hard disk, or any other medium on which a program element as described above can be stored.

The following figures illustrate embodiments of the invention.

These and other features, aspects and advantages of the present invention will become better understood with reference to the accompanying figures and the following description.

### SHORT DESCRIPTION OF THE FIGURES

Fig. 1 shows a block diagram of an arrangement with a device status indicator according to an example,
Fig. 2 shows block diagram of a circuit breaker according to an example,
Fig. 3 shows a flow diagram of a method according to an example.

### DETAILED DESCRIPTION OF EMBODIMENTS

In the following, the invention is explained in a more detailed example, in which device status information is root-cause information, although further information may be transmitted as described above. In the example, root-cause information is collected, stored and transmitted in the case of a circuit breaker trip, however the invention is not limited to that, but device status information may be collected, stored and transmitted also in regular intervals or continuously. Furthermore, information is stored in a non-volatile memory in the following example, although, in general, any memory may be used.

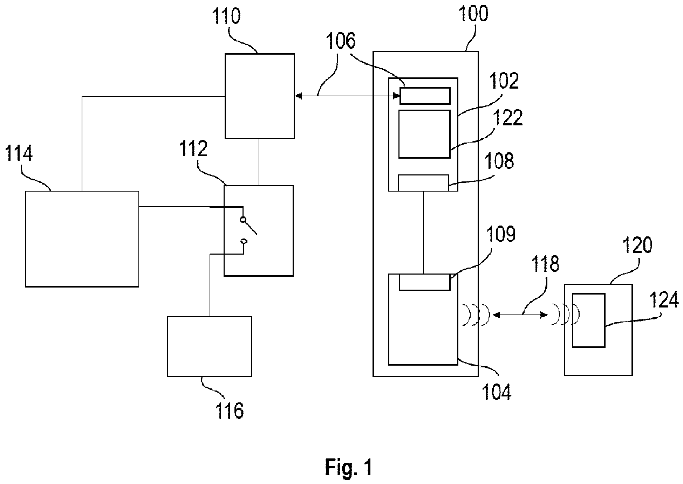

Fig. 1 shows a block diagram of an arrangement with a device status indicator 100 according to an example. The device status indicator 100 comprises a memory 122, e.g., a non-volatile memory, in a memory module 102, and a communication module 104. The memory 122 has a controller interface 106 to a controller 110, that may be a microprocessor or a digital device able to process logic signals, as e.g. an FPGA, CPLD, ASIC, microcontroller, Digital Signal Processor (DSP) or any other logic device. The controller 110 may have an interface with breaker 112, that may analyse the voltage and the current behaviour of the power provided by energy device 116 to the circuit 114 to be monitored. The communication module 104 may be, for example, a near field communication device (NFC), or a radio-frequency identification device (RFID). Available RFID tags are active, battery assisted passive or passive. Since after a trip of the circuit breaker has occurred no power is available any more, passive RFID tags are used. The transmit frequency of the RFID tag can be chosen depending on the reading distance. E.g., for a reading distance < 30 cm, a Low Frequency (LF) RFID tag may be chosen with a frequency range between 125 kHz and 134.3 kHz. For a reading distance < 1.5 m a High Frequency (HF) tag with a transmit frequency of 13.56 MHz may be chosen, which is a preferred option, and for a reading distance > 1 m an Ultra High Frequency (UHF) tag transmitting between 860 and 960 MHz may be chosen. If a UHF RFID tag is used, smartphone would need to be fitted with an appropriate UHF reader hardware.

Besides RFID and NFC, any other communication device, which can receive power over air for operating its transmit circuits may be used. For example, communication module 104 may be a low power Bluetooth module comprising an additional internal or external antenna for receiving power over an induction power link. The communication module 104 is connected to the memory 102 over a communication interface 108, 109. A smartphone 120 or dedicated apparatus, e.g. an equivalent handheld device or any other mobile communication device 120 comprises in this example an integrated communication module 100 capable to provide wirelessly energy to the communication module 104 and further capable to at least receive data transmitted by communication module 104 over the wireless interface 118.

Circuit breaker 112 comprises sensors and circuits that analyse the current and voltage on the power line, which is feeding the circuit 114 or a load with energy. Temperature sensors may also be integrated in the circuit 114 communicating with the circuit breaker 112. Parts of the analysis and evaluation of the sensor data may, in one example, be performed by controller 110. Controller 110 may send a signal to breaker 112 to break the circuit because of its calculations. In case of arc-fault detectors, there are different types of arc faults, e.g. arc faults parallel or serial to circuit 114, that may be detected and distinguished by their current-time and voltage-time behaviour and frequency characteristics of the current.

At the time instant of the trip, the breaker sends the sensed data, for example, voltage and current including time-stamps, the frequency of the current, temperature data, etc., to the controller 110. Alternatively, sensed data is retrieved from the monitored circuit 114 to the controller. The controller updates the memory 102 with the raw data and /or with evaluated characteristics of the root cause of the trip. Moreover, it may comprise results of the evaluation, such as, for example, information, if the trip was caused due to overheating, overload, or series/parallel arcs for AFDs. Furthermore, it may provide information about the intensity of the fault. Moreover, the controller may evaluate, whether a restart is safe or not and may store a corresponding flag or a binary code representing a recommendation. The memory is connected to a remotely powered wireless communication module 104, such as an NFC or RFID. When a remote communication device 120, such as a smartphone, comprising an attached or integrated remote communication module 124, that is compatible to the a communication module 124, is in adequate vicinity to the communication module 104, energy is transmitted wirelessly, for example via induction from the remote communication module 124 to the communication module 104 powering up the communication module 104 and the non-volatile memory 122, so that the communication module 104 can retrieve the data from the non-volatile memory 122 and transmit the data via the wireless interface 118 to the remote communication module 124, which can be accessed by the remote communication device 120. The remote communication device 120 may comprise at least a processor, running for example an application ("App"), and a display to indicate the received data to a user.

Alternatively, the controller writes only the raw data into the memory 102 according to a pre-defined format, and the application on the remote communication device 120 evaluates the data. This allows first a simple logic of the controller, a short processing time, which is important, since the time where power is available after a trip is very short, and second, to flexibly update the software. Third, the update may be performed remotely and centrally, so that a plurality of smartphones may be updated with low effort in comparison to a local update of the controller. Furthermore, the controller may write the type or model number of the circuit breaker into the memory allowing to evaluate the data specifically in respect to the circuit breaker type or model and to the monitored circuit.

The trip indicator may thus be a so-called "App" on the smartphone or a web portal. The root cause data may thus also be provided to a server and, for example, evaluated by the server or by persons connected to the server. The server may be part of a network and may be connected to other servers or clients, or to a cloud, for storing the data, further processing and analysing the data, releasing an alarm, etc.

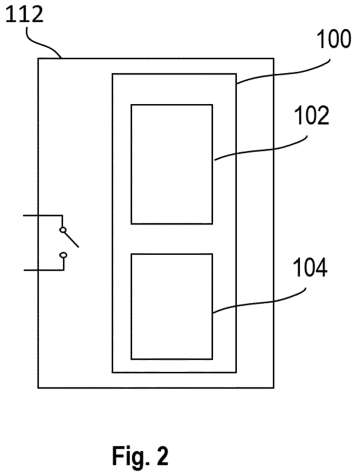

Fig. 2 shows a circuit breaker 112 according to an embodiment. In this example, the memory module 102 and the communication module are integrated into the circuit breaker 112. Other options with respect to the integration of modules and devices into the breaker are possible. For example, also controller 110 may be part of the circuit breaker 112.

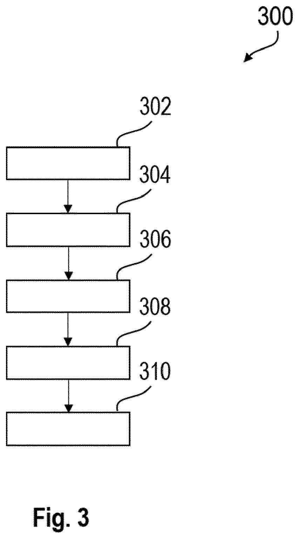

Fig. 3 shows a flow diagram of a method 300 for indicating device status information according to an example. In step 302, circuit breaker device status information is collected, e.g., when a circuit breaker trip event occurs. In step 304 the circuit breaker device status information is stored in a memory. In step 306, the passive wireless communication module is powered wirelessly by a remote communication device 120, that comprises a remote communication module 124, that is compatible to communication module 104 of the indicator 100. In step 308, the device status information is retrieved by a remote communication device 124 from the memory, and in step 310 the device status information is indicated.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfil the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. Device status indicator (100) for a circuit breaker (112), comprising
a memory module (102) comprising a memory (122), a controller interface (106), and a first data interface circuit (108); and
a passive wireless communication module (104) comprising a communication unit, a second data interface circuit (109) connected to the first data interface circuit, and a wireless interface (118);
wherein
the memory module (102) is configured to receive device status information from the controller interface (106); and wherein
the passive wireless communication module (104) is configured to retrieve the device status information from the memory (122) over the data interface (108) and to send the device status information over the wireless interface (118) when it is wirelessly powered.

2. Device status indicator according to claim 1, wherein the device status indicator is a trip-root cause indicator, configured to indicate trip-root cause information, a measurement indicator, configured to indicate measured signals, or a status indicator, configured to indicate device data.

3. Device status indicator (100) according to claim 1 or 2, wherein
the memory (122) is a non-volatile memory;
the device status information is root-cause information; and
the memory module (102) is configured to receive the root-cause information from the controller interface (106) and to store the received root-cause information in case of a circuit breaker trip before the circuit is tripped.

4. Device status indicator (100) according to one of the preceding claims, wherein the device status information comprises device status raw data or processed device status raw data and/or a circuit breaker identification.

5. Device status indicator (100) according to one of the preceding claims, wherein the wireless device status indicator (100) further comprises an energy buffer;
wherein the memory (122) is configured to receive the device status information at least partly after a circuit breaker trip; and wherein
the energy buffer is configured to provide, after the circuit breaker trip, buffered energy to the controller interface (106) and to the memory (122) for storing the device status information.

6. Device status indicator (100) according to one of the preceding claims, wherein the passive wireless communication module (104) is a Near Field Communication (NFC) module or an RFID module.

7. Device status indicator (100) according to one of the preceding claims, wherein the wireless device status indicator is mounted inside the housing of the circuit breaker.

8. Circuit breaker (112), comprising a device status indicator (100) according to one of the preceding claims.

9. Method (300) for indicating device status information of a circuit breaker, comprising the steps
collecting (302), device status information;
storing (304) the device status information in a memory;
powering (306), by a remote communication device (124), the passive wireless communication module (106) wirelessly;
retrieving (308), by a remote communication device (124), the device status information from a memory (122); and
indicating (310) the device status information.

10. Controller (110) for controlling device status indicator (100) according to claims 1 to 8,
wherein the controller (110) is configured to receive device status data, to evaluate the data, and in case that a trip event is determined, to signal a trip event to the circuit breaker (112); and
wherein the controller (110) is further configured to store device status raw data in a memory (122) when a circuit breaker trip event is determined; and wherein the controller is configured to be switched off in case of a circuit breaker trip.

11. Controller (110) according to claim 10, wherein the controller (110) is further configured to process the device status raw data and to store results of the processing and/or a circuit breaker identification in the memory (122).

12. Program element, which when being executed by the controller (110), instructs the device status indicator (100) to perform the steps according to the controller configuration of claim 10 or 11.

13. Computer readable medium on which a program element according to claim 12 is stored.
